Europäisches Patentamt

European Patent Office

Office européen des brevets

(19)

(11) Publication number: **0 105 789**

**A1**

(12) **EUROPEAN PATENT APPLICATION**

(21) Application number: **83401866.5**

(22) Date of filing: **23.09.83**

(51) Int. Cl.³: **F 16 D 27/10**

(30) Priority: **30.09.82 US 430907**

(43) Date of publication of application:
**18.04.84 Bulletin 84/16**

(84) Designated Contracting States:
**DE FR GB IT**

(71) Applicant: **Canadian Fram Limited**
**540 Park Avenue East P.O. Box 2014**
**Chatham Ontario N7M 5M7(CA)**

(72) Inventor: **Yew, Kwang**
**99 Parkwood Drive**
**Chatham Ontario N7M 2B1(CA)**

(72) Inventor: **DeJong, Allan Wayne**
**34 English Side Road**
**Chatham Ontario N7M 4H7(CA)**

(74) Representative: **Brullé, Jean et al,**
**Service Brevets Bendix 44, rue François 1er**
**F-75008 Paris(FR)**

(54) **Power steering pump failsafe clutch.**

(57) A failsafe clutch for driving a shaft (24) e.g. of a power steering pump (22), comprises a rotor (44) fixed to the shaft (24) and axially spaced from a relatively rotatable body (e.g. a pulley) (70) on which is mounted a axially movable magnetic plate (90) having friction material (96) urged by springs (98) into engagement with the rotor (44). Disengagement of the magnetic plate (90) from the rotor (44), and therefore of the clutch is obtained by energising a stationary electromagnet (100) comprising two coils (106a, 106b) connected in parallel to disengage the clutch, and then in series to hold the clutch disengaged.

Fig-1

EP 0 105 789 A1

## POWER STEERING PUMP FAILSAFE CLUTCH

This invention relates to electro-magnetic clutches and more specifically to a failsafe clutch that provides for engagement between a driven and a driving member in the absence of the control signals.

With the downsizing of automotive engines, the continued operation of auxiliary devices such as alternators, cooling fans and power steering units generates a noticeable power drain on the smaller engine. It has been proposed that within each of the above type accessories an electromagnetic clutch be incorporated which is engaged during demand periods to actuate these devices and which is disengaged during other periods to lessen the power drain on the engine. A feature of the present invention is the incorporation of a stationary coil which is normally activated by control signals thus causing a disengagement between a driving and a driven member. During those intervals wherein it is desirable to drive the device, the control signals are removed thus permitting the clutching engagement of the driving and driven members. The present invention therefore provides an electromagnetic clutch having a failsafe feature, that is, during periods of electrical malfunction which prohibits control signals from being transmitted to or being received by the clutching mechanism, the electromagnetic clutch is so configured as to maintain the continued operation of the device. Inasmuch as the operation of the present invention requires the continued application of electric energy to the electromagnetic coil, the coil assembly is provided with two interwoven coils that are switched to run in parallel during the initial phases of clutch engagement to provide a large number of ampere-turns to provide for a pull-in force and are thereafter switched to a series connection to provide a lesser hold magnetic force to reduce the electrical power requirements of the clutch. Accordingly, the present invention comprises:

a clutch for driving a device having a shaft extending therefrom, comprising:

an engaging plate or rotor drivingly engaged to and for powering the shaft;

a driven member mounted for rotation about the shaft, and adapted to be rotated by an applied force; having a surface situated apart from said engaging plate defining a gap therebetween;

magnetic means, positioned within the gap mounted to said driven member for axial movement therewith in response to a magnetic field;

friction means mounted to and movable with said magnetic means for drivingly engaging and disengaging with said engaging plate in relation to the motion of said magnetic plate;

bias means for urging said friction means into engagement with said engaging plate; and

coil assembly means stationarily mounted relative to said driven member, oppositely positioned relative to said magnetic means for developing the magnetic force and for causing the magnetic means and the said friction means to move away from and to disengage the engaging plate.


## Brief Description of the Drawings

In the drawings:

FIGURE 1 illustrates a cross-sectional view of a failsafe clutch.

FIGURE 2 is a cross-sectional view taken through section 2-2 of FIGURE 1.

FIGURE 3, is a plan view of a magnetic plate.

## Detailed Description of the Drawings

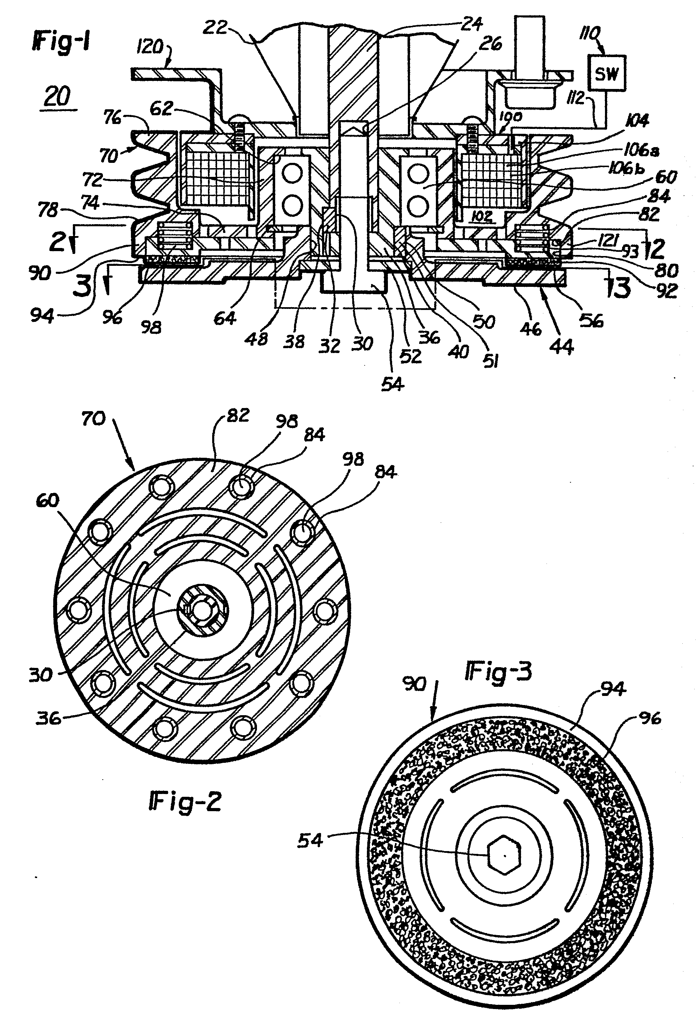

Reference is made to FIGURE 1 which illustrates an electromagnetic clutch assembly 20 adapted to drive a device such as a power steering pump 22 (shown in partial section). The pump 22 contains a shaft or driven member 24 protruding therefrom. The shaft includes a taped threaded hole 26 and a keyway 30 adapted to receive a key 32. A collar shaft 36 is mounted in close fitting engagement about the shaft 24. The collar shaft further includes a first keyway 38 aligned to the keyway 30 on the shaft 24 and further adapted to receive the key 32. The collar shaft 36 further includes a second keyway 40. An engagement plate or rotor 44 having a radially extending flange 46 and a centrally positioned opening 48 is pressfit about the walls of the collar shaft. The engaging plate or rotor 44 includes a keyway 50 aligned to the second keyway 40 of the collar shaft and adapted to receive a key 51 to permit the positive engagement between the engaging plate 44 and the collar shaft 36. The collar shaft 36 and engaging plate 44 are maintained in axial engagement to the shaft 24 by a washer 52 and bolt 54 that is adapted to engage the threaded hole 26 on the shaft 24. The flange 46 contains an inner positioned annular engagement surface 56.

The clutch assembly 20 further includes a bearing 60 that is pressfit about and rotatable with the collar shaft 36. The bearing 60 is positioned between a shoulder 62 of the collar shaft 36 and a bearing retainer 64. A pulley body 70 having an inner circumferential member or wall 72 is mounted for rotational engagement with the bearing 60. The circumferential wall 72 terminates in a radially extending annular portion 74 which in turn supports an axially extending member 76. Those familiar in the art will appreciate that the member 76 contains grooves 78 to receive belts (not shown) which rotate the pulley body 70 in response to the motion of an engine (not shown). The radially extending portion 74 of the pulley body contains a bore 80 terminating at a lower surface 82. The lower surface 82 contains a plurality of bores 84 as more particularly illustrated in FIGURE 2. A magnetic plate 90 shown in isolation in FIGURE 3 is loosely fitted within the bore 80. The magnetic plate 90 contains a first surface 92 having a plurality of bores or holes 93 equal in number and positioned oppositely from the bores 84. The magnetic plate 90 further includes an outwardly facing second surface 94 having bonded thereto a friction material 96. The magnetic plate 90 and friction material 96 are biased toward the engaging plate by a plurality of clutching or engaging springs 98 mounted within the cofacing bores 84 and 93.

A stationary coil assembly 100 is mounted within the cavity 102 interior to the various members of the pulley body 70. The coil assembly 100 comprises a cylindrical bobbin 104 having wound thereabout at least two coils 106a and b. These coils are transmitted to a switch 110 which can be part of the coil assembly 100 or remotely positioned and, under the control of the controller (not shown) of a known variety, connects the coils 106a and b in series or parallel relation to control the generation of magnetic force. By way of illustration a single wire 112 is shown interconnecting the coil assembly 100 and coils 106a and b with the switch 110. The coil assembly 100 is maintained in a fixed relation relative to the various rotating members by a bracket 120 which is attached to the pump 20 or another fixed object.

In operation when the pump 20 is not required the stationary coil assembly 100 is energized so that the magnetic force will pull the magnetic plate 90 and associated friction material 96 against the engaging springs 98 thereby disengaging the friction material 96 from the engaging plate or rotor 44. To affect a rapid disengagement of the friction material from the engaging plate the switch 110 initially connects the coils 106 a and b in parallel relation to generate a relatively large magnitude pull-in magnetic force which pulls the magnetic plate 90 away from the rotor 44. Thereafter, after disengagement the switch 110 connects the two coils 106a and b respectively in series relation to produce a lower level magnetic force which is adequate to hold the magnetic plate 90 at a a fixed position against the bias force of the clutching springs 98. The series connection of the coils reduces the electrical power requirements during these disengagment intervals. During disengagement, the pulley body 70 is permitted to free wheel relative to the collar shaft 36 about the bearing 60. When the power steering pump 20 is required, the control (not shown) disables the control signals transmitted to the coil assembly 100. This permits the magnetic field to dissipate thereby permitting the engaging springs 98 to push the magnetic plate 90 and friction material 94 into engagement with the engaging plate 44. The torque or power transmitted to the pulley body is thereafter transmitted through to the magnetic plate 90 by means of the engaging springs 98 which aid in absorbing torsional shock when engaged. The torque is thereafter transmitted to the engaging plate or rotor 44 by means of the frictional engagement with the friction material 96. The motion of the engaging plate 44 is transmitted through the key 50, the collar shaft 36, the key 32 to the shaft 24, thus powering the pump 20.

Many changes and modifications to the above described embodiment of the invention can of course be carried out without departing from the scope thereof. Accordingly, that scope is intended to be limited only by the scope of the appended claims.

Claims:

1.   A failsafe clutch for rotating a device having shaft (24) to be driven comprising:

a collar shaft (36) adapted to receive and drivingly engage the shaft;

engaging plate or rotor (44) attached to and for driving said collar shaft (36), said engaging plate including a radially extending annular portion (46) having an annular engaging surface (56);

a bearing (60) mounted in rotational engagement about said collar shaft;

a pulley body (70) including an inner cylindrical member (72) attached to said bearing in rotational relation relative to said collar shaft, and said engaging plate (44), an outer axially extending pulley member (76) coaxially positioned relative to said cylindrical member and a radially extending member (74) linking one end of each said cylindrical member and said pulley member, said radially extending member including an outwardly positioned surface having a partially extending bore (80) therein;

a magnetic plate (90) loosely received within said bore (80) for axial movement relative thereto in response to a magnetic field, including a first surface (94) positioned into said bore and a second surface (96) opposite said first surface (94) and opposingly positioned relative to said engaging surface;

friction means including friction material attached to said second surface (96);

-8-

bias means (98) interposing said bore and said magnetic plate for biasing said magnetic plate towards said engagement surface (56) and for engaging the plate rotatably to the pulley;

coil assembly means, (110) mounted in fixed relation to said pulley body for developing a bi-level magnetic force to urge said magnetic plate and friction means from said engaging surface in response to control signals applied thereto.

2.    The clutch as defined in Claim 1 wherein: said coil assembly means (110) includes at least two coils (106a and b) initially connected in parallel relation when said coil assembly is activated by the control signal and thereafter maintained in series relation until the termination of the control signal.

3.    The clutch as defined in Claim 2 wherein said bias means (98) includes a plurality of uniformly positioned coil springs (98) interposing said magnetic plate and said radially extending member (74) of said pulley body (70).

4.    The clutch as defined in Claim 3 wherein said coil assembly means is positioned within a cavity (102) formed by the various portions of said pulley body.

5. A clutch for driving a device having a shaft (24) extending therefrom, comprising:

an engaging plate or rotor (44) drivingly engaged to and for powering the shaft;

a driven member (24) mounted for rotation about the shaft, and adapted to be rotated by an applied force; having a surface mounted apart from said engaging plate defining a gap therebetween;

magnetic means (90, 92, 93, 94) supported by said driven member for axial movement therewith in response to a magnetic field and positioned within the gap;

friction means (96) mounted to and movable with said magnetic means for drivingly engaging and disengaging with said engaging plate (44) in relation to the motion of said magnetic plate;

bias means (98) for urging said friction means into engagement with said engaging plate;

coil assembly means (110) stationarily mounted relative to said driven member (24), oppositely positioned relative to said magnetic means for developing the magnetic force and for causing said magnetic means to move away from and causing said friction means to disengage said engaging plate.

6. The clutch as defined in Claim 5 wherein said coil assembly means (110) includes at least two coils (106a, b) that, during the disengagement of said friction means from said engaging surface said coils are connected in a parallel relation and during intervals when said friction means is being held apart from said engaging plate by virtue of magnetic force said coils are connected in series relation.

7. The clutch as defined in Claim 5 wherein said coil assembly means (110) includes at least two coils (106a, b) and said clutch further includes switch means for connecting said coils in parallel relation to develop a pull-in magnetic force for disengaging said friction means from said engaging plate and for connecting said coil in series relation after said friction means has disengaged for establishing a lower level magnetic force to hold said friction means in its activated position apart from said engaging surface.

0105789

1 / 1

Fig-1

Fig-2

Fig-3

0105789

European Patent
Office

EUROPEAN SEARCH REPORT

Application number

EP 83 40 1866

## DOCUMENTS CONSIDERED TO BE RELEVANT

| Category | Citation of document with indication, where appropriate, of relevant passages | Relevant to claim | CLASSIFICATION OF THE APPLICATION (int. Cl. ³) |
|---|---|---|---|
| Y | FR-A-1 157 308 (COTAL) <br> * The whole document * | 1,3,5 | F 16 D 27/10 |
| A | | 2 | |
| Y | GB-A- 973 229 (ZAHNRADFABRIK FRIEDRICHSHAFEN) <br> * The whole document * | 1,3,5 | |
| Y | US-A-4 030 583 (MILLER) <br> * The whole document * | 1,3,5 | |
| P,A | US-A-4 376 476 (HAGIRI) <br> (published March 15, 1983) <br> * The whole document * | 1 | |
| A | US-A-1 601 791 (BING) <br> * The whole document * | 1 | **TECHNICAL FIELDS SEARCHED (int. Cl. ³)** <br><br> F 16 D 27/00 |
| A | US-A-3 989 129 (BRANDENSTEIN) <br> * The whole document * | 1 | |
| A | FR-A-1 130 997 (ALLMÄNA SVENSKA) | | |
| A | US-A-3 055 470 (PIERCE) | | |

--- -/-

The present search report has been drawn up for all claims

| Place of search | Date of completion of the search | Examiner |
|---|---|---|
| THE HAGUE | 03-01-1984 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| A | US-A-3 724 621 (HEIDORN) | | | |

-----

TECHNICAL FIELDS
SEARCHED (Int. Cl. ³)

The present search report has been drawn up for all claims

| Place of search THE HAGUE | Date of completion of the search 03-01-1984 | Examiner BALDWIN D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82